# EUROPEAN PATENT APPLICATION

(11) **EP 0 739 658 A2**
(43) Date of publication of application: **30.10.1996**
(21) Application number: 96830226.5
(22) Date of filing: 19.04.1996
(51) Int. Cl.: B09B 1/00, E02D 3/026

(54) **Machine for crushing and compacting, particularly for the treatment of urban and industrial landfills**

(30) Priority: 26.04.1995 IT RM950264
(71) Applicant: OFFICINE PICCINI S.p.A., 06100 Perugia (IT)
(72) Inventor: Piccini, Aldo, 06100 Frazione Olmo, Perugia (IT)
(74) Representative: Iannone, Carlo Luigi

(57) **Abstract**

The invention relates to a machine for crushing and compacting, particularly for the treatment of urban and industrial landfills, comprising a crushing / compacting assembly providing a powered horizontal rotor (13) made up of a shaft bearing a plurality of circular discs (17), spaced each other by spacers, and a plurality of cutting elements (18) rotatably coupled with said circular discs (17), and substantially provided one between each pair of discs, and further comprising steel compacting wheels (11).

## Description

The present invention relates to a machine for crushing and compacting, particularly for urban and industrial landfills.

More specifically, the invention concerns a machine of the above kind which allow to obtain decidedly superior results with respect to the machine presently used for the same work.

As it is well known, at present, the treatment of wastes is particularly characterised by three aspects constituting very expensive cost centres.

First, it is necessary to realise a peripheral road ascending with the vertical growing of waste in order to allow that heavy trucks discharge the wastes.

Secondly, it is necessary to provide earth that must be placed as layers above the wastes.

Finally, it is necessary to perform a compactation in order to reduce the volumes by expensive compacting machines which at most can reach a specific gravity of wastes of 700 Kg/m³.

In view of the above, the Applicant has realised and prepared an innovative machine the object of which it that of solving the above mentioned drawbacks, providing a solution able to guarantee a better treatment of wastes with lower costs.

The main object of the invention is that of eliminating the traditional access road that must be realised in the waste, being the proposed machine able to realise said road suitably crushing and compacting the wastes.

Still another object of the present invention is that of providing a machine able to receive the discharge mud of the water conditioners mixing them with wastes and replacing them by earth.

Further, the machine proposed according to the present invention can chop any kind of material having sizes ranging from 1 meter of height and up to 1,70 m of length, thus reducing the volumes and reaching a specific gravity of 1400 Kg/m³.

It is well evident that the above mentioned features allow to have double lifetime for the landfill.

Further, the machine suggested according to the present invention allows to realise a working method suitable both for existing landfills and for new landfills.

These and other results are reached according to the present invention by a machine for crushing and compacting substantially comprising a horizontal powered rotor, comprised of a bearing shaft divided into three parts in order to make the assembling and the disassembling easier, said rotor being able to house three groups of tools, disposed each other at 120°, and made up of hammers and/or cutting elements, combined in groups of 12, 24 or 36, hinged in the hooking point of the rotor.

The machine according to the present invention provides the mounting of suitably shaped cutting elements, useful to mince every kind of waste, either made up of plastic, wood, concrete or iron-based materials, and the use of steel compacting wheels, of a rotor mounted on a frame having one side supported by two independent axle shafts, which can lift and lower with respect to the same frame, and that can alternatively provide two pneumatic tyres or steel compacting wheels.

The crushing and compacting group is supported on the front side by a generic tractor tracked by a towing rudder hinged on the frame and adjustable in height.

The machine according to the invention works at a depth within the earth, said depth ranging about 50 - 60 cm, determined by the relative position of the wheels with respect to the frame, while the granulometry of the crushed material is determined by the number of cutting elements used and by the advancing speed determined by the towing tractor.

It is therefore specific object of the present invention a machine for crushing and compacting, particularly for the treatment of urban and industrial landfills, comprising a crushing / compacting assembly providing a powered horizontal rotor made up of a shaft bearing a plurality of circular discs, spaced each other by spacers, and a plurality of cutting elements rotatably coupled with said circular discs, and substantially provided one between each pair of discs, and further comprising steel compacting wheels.

Preferably, according to the invention, said bearing shaft is made up of three pieces.

Still according to the invention, said cutting elements are disposed at an angle of 120° each other and are divided into three groups.

Still according to the invention, 12, 24 or 36 cutting elements are provided.

Furthermore, according to the invention, said discs are provided with at least three through holes, symmetrically provided with respect to the shaft and upon which said cutting elements are coupled.

Always according to the invention, said steel compacting wheels provides a plurality of projections, which helps during the compactation action.

Further, the machine according to the invention can provide two independent axle shafts, able to lift and lower with respect to the frame of the machine.

The present invention will be now described for illustrative but not limitative purposes according to its preferred embodiments with particular reference to the enclosed drawings, wherein:
figure 1 diagramatically shows a front axonometric view of the machine according to the invention, fitted for towing;
figure 2 is an axonometric rear view of the machine of figure 1;
figure 3 shows a cutting element suitable for the treatment of wastes; and
figure 4 shows the vibrating blade for the reclamation and the position of the lubrication and supply elements.

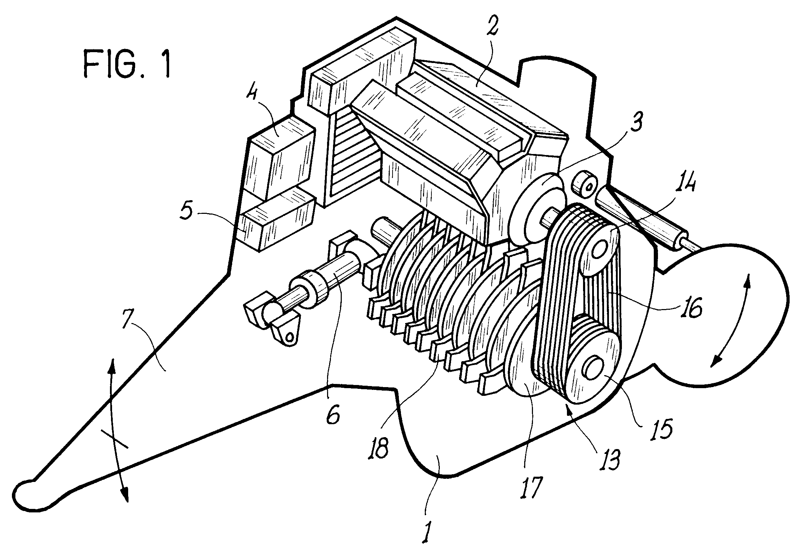

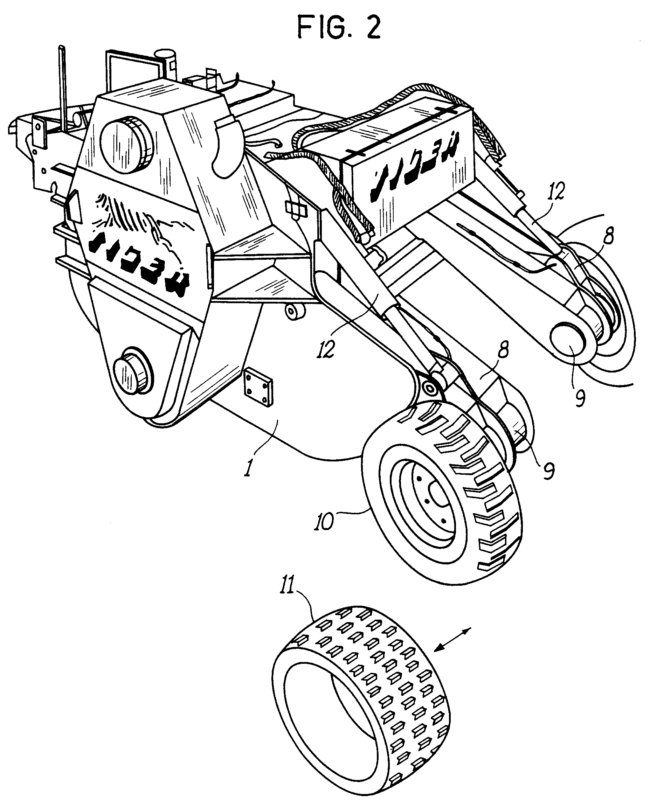

Referring to the enclosed drawings, and particularly to figures 1 and 2, the machines according to the invention is shown, said machine comprising a support frame 1, on the upper part bearing a power group 2, a flexible coupling 3, a pneumatic valve box 4, a hydraulic valve box 5, a rudder lifting piston 6, the rudder 7.

Behind said frame 1, swinging arms 8 are articulated, said arms being fixed to two axle shafts 11 having pneumatic wheels 10, or steel compacting wheels 11. Particularly, for the use in landfills, steel compacting wheels 11 are used.

A double effect hydraulic jack 12 is articulated with each axle shaft 9, also said shaft being articulated to the frame 1 and operable by push buttons provided on a suitable control board (not shown).

On the lower part of the frame 1, a horizontal rotor or beater 13 is pivoted, perpendicularly with respect to the motion direction, said rotor being powered by a drive pulley 14 and a driven pulley 15 connected by an elastic belt with more than one grooves or single coupled belts 16.

Said horizontal rotor 13 is made up of a shaft divided into three parts, upon which circular discs 17 are fixed, said discs being spaced each other by spacers and provided close to their edge with at least three through holes, realised in symmetrical positions with respect to the same shaft.

Within the holes of the above discs, which obviously are aligned each other, a corresponding number of cylindrical bars is provided, said bar bearing, by the rotary coupling, the cutting elements 18, provided with corresponding transverse trough holes 19.

In practice, said cutting elements 18 are each placed between a pair of discs 17.

In case the machine according to the invention is used for crushing, said cutting elements are replaced by hammers.

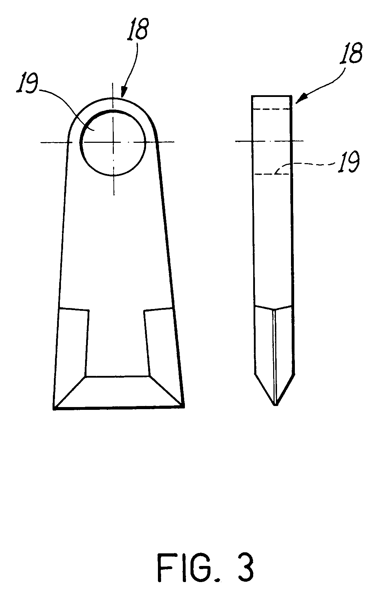

The cutting element 18, see particularly figure 3, is one of the models used in the landfill, the shape, dimension and number of cutting blades of which can be varied.

The position of the rotor 13 within the frame 1 is such that during the rotation, the circumference described by the apex of each hammer, in its greater extension position, comes out with respect to the horizontal plane defined by the lower edges of the same frame for about 15 cm.

It is further advisable to point out that the lateral edges of the latter are preferably divaricated in correspondence of their front portion with respect to the advancement direction so as to allow the conveyance toward the rotor 13 of all the material provided on the frontal side of the machine.

A towing rudder 7 can be fixed in front of the bearing frame 1.

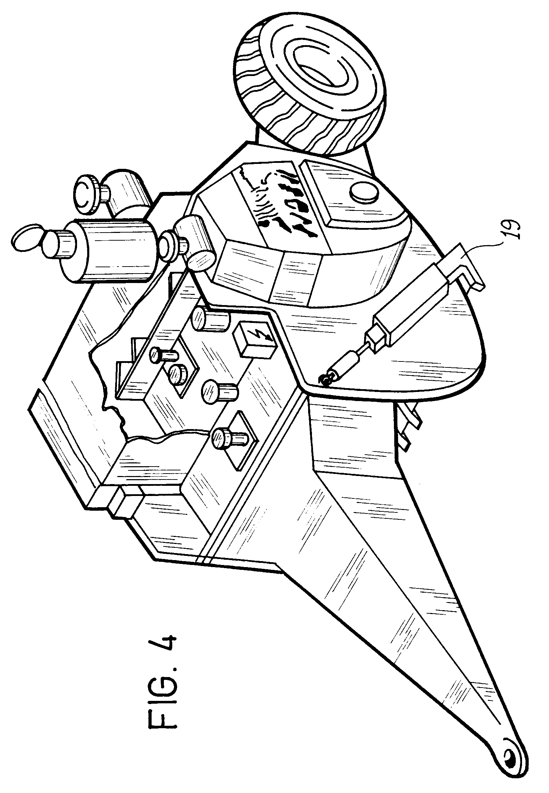

In figure 4 an optional vibrating blade 20 is shown, said blade being used for the reclaiming. Furthermore, the lubrication and supplying elements are shown.

From the above specification, it is easily understood the better functionality and use convenience of the machine according to the invention.

The present invention has been described for illustrative but not limitative purposes according to its preferred embodiments, but it is to be understood that modification and/or changes can be introduced by those skilled in the art without departing from the relevant scope as defined in the enclosed claims.

## Claims

1. Machine for crushing and compacting, particularly for the treatment of urban and industrial landfills, characterised in that it comprises a crushing / compacting assembly providing a powered horizontal rotor made up of a shaft bearing a plurality of circular discs, spaced each other by spacers, and a plurality of cutting elements rotatably coupled with said circular discs, and substantially provided one between each pair of discs, and further comprising steel compacting wheels.

2. Machine according to claim 1, characterised in that said bearing shaft is made up of three pieces.

3. Machine according to one of the preceding claims, characterised in that said cutting elements are disposed at an angle of 120° each other and are divided into three groups.

4. Machine according to one of the preceding claims, characterised in that 12, 24 or 36 cutting elements are provided.

5. Machine according to one of the preceding claims, characterised in that said discs are provided with at least three through holes, symmetrically provided with respect to the shaft and upon which said cutting elements are coupled.

6. Machine according to one of the preceding claims, characterised in that said steel compacting wheels provides a plurality of projections, which helps during the compactation action.

7. Machine according to one of the preceding claims, characterised in that it provides two independent axle shafts, able to lift and lower with respect to the frame of the machine.

8. Machine according to anyone of the preceding claims, substantially as illustrated and described.
